# EUROPÄISCHE PATENTSCHRIFT

(11) **EP 2 580 090 B1**
(45) Veröffentlichungstag und Bekanntmachung des Hinweises auf die Patenterteilung: **08.06.2016**
(21) Anmeldenummer: 11730559.9
(22) Anmeldetag: 10.06.2011
(51) Int. Cl.: B60N 2/48

(54) **KOPFSTÜTZE FÜR EINEN FAHRZEUGSITZ**
HEAD RESTRAINT FOR A VEHICLE SEAT
APPUIE-TÊTE POUR SIÈGE DE VÉHICULE

(30) Priorität: 11.06.2010 DE 102010023404
(43) Veröffentlichungstag der Anmeldung: 17.04.2013
(73) Patentinhaber: Johnson Controls GmbH, 51399 Burscheid (DE)
(72) Erfinder: FROTZ, Thomas, 51399 Burscheid (DE); QUANDT, Denis, 51069 Köln-Dünnwald (DE)
(74) Vertreter: Wolff, Felix
(86) Internationale Anmeldenummer: PCT/EP2011/002846
(87) Internationale Veröffentlichungsnummer: WO 2011/154150

(56) Entgegenhaltungen:
- DE-A1-102008 012 217
- DE-B3-102004 016 474

## Beschreibung

Die Erfindung betrifft eine Kopfstütze für einen Fahrzeugsitz, bei welcher zumindest ein dem Kopf des Sitzinsassen zugewandtes erstes Teilstück linear in Richtung des Kopfes eines Sitzinsassen verlagerbar ist, wobei bei der Verlagerungsbewegung zwischen dem ersten Teilstück und einem an einem dritten Teilstück angeordneten zweiten Teilstück der Kopfstütze eine Relativbewegung stattfindet und eine Anlagefläche des ersten Teilstücks an einer Anlagefläche des zweiten Teilstücks anliegt und eine Anlagefläche mit einem Formschlussmittel, insbesondere einer Verzahnung, versehen ist. Des Weiteren betrifft die vorliegende Erfindung ein Verfahren zur Verstellung einer Kopfstütze.

Aus der Druckschrift DE 199 23 909 A1 ist eine Kopfstütze bekannt, die aus einem mit der Rückenlehne des Fahrzeugsitzes über Haltestangen starr, gegebenenfalls auch höhenverstellbar verbundenen Grundkörper besteht, der in einem wannenartig ausgebildeten Polstersegment angeordnet ist. Bei einem Unfall wird das Polstersegment translatorisch zum Kopf des Sitzinsassen hin bewegt, um einem Schleudertrauma vorzubeugen. Die hierzu erforderliche Kraft wird durch eine in Verschieberichtung vorgespannte Feder innerhalb einer teleskopartigen Führungseinrichtung erzeugt. In der Offenlegungsschrift DE 39 00 495 A1 wird eine weitere Kopfstütze beschrieben, bei welcher ein Polstersegment unfallbedingt gegenüber dem Grundkörper um eine feste Drehachse nach vorne schwenkbar ist. Als Antriebseinrichtung dient eine federbelastete Kolben/Zylinderanordnung in Verbindung mit einem Stützhebel, bei welcher die Kolbenstange im Bereich der Drehachse am Grundkörper und der Zylinder am Polstersegment angelenkt ist. Aus der Druckschrift DE 199 41 712 C1 ist ferner eine Kopfstütze bekannt, bei welcher ein verlagerbares Polsterelement mit dem Grundkörper über einen Scherenmechanismus verbunden ist, mittels dessen das Polsterelement aus einer Ruhestellung nach vorne in eine Gebrauchsstellung bewegbar ist. DE-A-10 2004 016474 bzw. DE 10 2004 016 474 B3 lehren eine Kopfstütze für einen Fahrzeugsitz, bei welcher zumindest ein dem Kopf des Sitzinsassen zugewandtes Teilstück der Kopfstütze unfallbedingt unter der Wirkung einer Antriebseinrichtung aus einer Gebrauchsstellung zum Kopf des Sitzinsassen hin in eine Sicherheitsstellung verlagerbar ist. Hierbei werden Teilstücke der Kopfstütze teleskopartig auseinanderbewegt, um eine Sicherheitsstellung der Kopfstütze einzunehmen. Insbesondere die zur Komforterhöhung manuell verstellbaren Kopfanlageflächen haben den Nachteil, dass die Verstellung oftmals mit Geräuschbildung verbunden ist.

Der Erfindung liegt die Aufgabe zugrunde, eine Kopfstütze durch ein Verfahren zur Verstellung einer Kopfstütze zur Verfügung zu stellen, die/das die Nachteile des Standes der Technik nicht aufweist.

Gelöst wird die Aufgabe mit einer Kopfstütze für einen Fahrzeugsitz, bei welcher zumindest ein dem Kopf des Sitzinsassen zugewandtes erstes Teilstück linear in Richtung des Kopfes eines Sitzinsassen und zurück verlagerbar ist, wobei bei der Verlagerungsbewegung zwischen dem ersten Teilstück und einem an einem dritten Teilstück angeordneten zweiten Teilstück der Kopfstütze eine Relativbewegung stattfindet und eine Anlagefläche des ersten Teilstücks an einer Anlagefläche des zweiten Teilstücks anliegt und eine Anlagefläche mit einem Formschlussmittel, insbesondere einer Verzahnung, versehen ist. Erfindungsgemäß ist nun vorgesehen, dass zwischen einer Ebene, die senkrecht zur Verlagerungsrichtung angeordnet ist, und dem Formschlussmittel zumindest abschnittsweise ein Radialwinkel > 0° und < 90° vorgesehen ist.

Die vorliegende Erfindung betrifft eine Kopfstütze, die an der Rückenlehne eines Fahrzeugsitzes angeordnet ist. Ein derartiger Fahrzeugsitz kann einer oder mehreren Personen Platz bieten. Bei dem erfindungsgemäßen Fahrzeugsitz kann es sich auch um eine Sitzbank handeln. Erfindungsgemäß weist diese Kopfstütze ein erstes Teilstück auf, das in der Regel gepolstert ist und das um ein lineares Stück in Richtung des Kopfes des Sitzinsassen und zurück verlagerbar ist. Die Verlagerung kann zur Komfortverstellung oder zur Verminderung von Kopf- und/oder Nackenverletzungen bei einem Heckaufprall erfolgen. Erfindungsgemäß weist die Kopfstütze ein zweites Teilstück auf, das an einem dritten Teilstück angeordnet, beispielsweise drehbar angeordnet ist. Das dritte Teilstück ist in der Regel ein Basisteil, mit dem die Haltestange(n) der Kopfstütze verbunden ist/sind. Zur Verlagerung des ersten Teils zum Kopf des Sitzinsassen hin oder davon weg, findet nun zwischen dem ersten und dem zweiten Teilstück eine Relativbewegung statt. Insbesondere handelt es sich dabei um eine Drehbewegung. Weiterhin erfindungsgemäß liegt eine Anlagefläche des ersten Teilstücks an einer Anlagefläche des zweiten Teilstücks an. Bei der Relativbewegung des ersten und des zweiten Teilstücks bewegen sich auch die Anlageflächen zueinander. Vorzugsweise haben die Teilstücke jeweils zumindest abschnittsweise einen zylindrischen Querschnitt. Vorzugsweise winden sich die Anlageflächen abschnittsweise um diesen zylindrischen Querschnitt mit einer gewissen Steigung herum. Sie haben folglich die Form des Teilstücks einer Helix. Besonders bevorzugt weist jedes Teilstück jeweils zwei Anlageflächen auf, die einander diametral gegenüberliegend angeordnet sind. Durch die Relativbewegung der Anlageflächen zueinander wird das erste Teilstück vor- und zurückbewegt. Vorzugsweise ist die Anlagefläche eines Teilstücks stationär und nur die andere Anlagefläche bewegt sich, rutscht vorzugsweise entlang der einen Anlagefläche. Erfindungsgemäß weist nun eine Anlagefläche Formschlussmittel, beispielsweise Zähne, insbesondere Sägezähne, auf. Die Formschlussmittel haben insbesondere die Aufgabe eine Relativbewegung zwischen den beiden Teilstücken zu verhindern, d.h. das erste Teilstück in einer bestimmten Position zu fixieren.

Erfindungsgemäß ist nun vorgesehen, dass zwischen der Ebene, die senkrecht zur Verlagerungsrichtung angeordnet ist und dem Formschlussmittel zumindest abschnittsweise ein Radialwinkel > 0° und < 90° vorgesehen ist. Das Formschlussmittel weist folglich in radialer Richtung einen Anstellwinkel auf. Das Formschlussmittel ist folglich vorzugsweise in Richtung des Kopfes des Sitzinsassen geneigt. Die Neigung des Formschlussmittels hat den Vorteil, dass ein Lösen des Formschlussmittels, beispielsweise von einem Verriegelungsmittel, wesentlich schneller und dadurch geräuschärmer und mit weniger Verschleiß erfolgt.

Vorzugsweise beträgt der Radialwinkel > 30°, besonders bevorzugt zwischen 40 und 50° und ganz besonders bevorzugt 45°. Vorzugsweise ist der Radialwinkel konstant über die gesamte Breite und Länge der Anlagefläche.

Die zu diesem Gegenstand der Erfindung gemachten Ausführungen gelten für die anderen Gegenstände der vorliegenden Erfindung gleichermaßen und umgekehrt.

Gemäß einem weiteren oder einem bevorzugten Gegenstand der vorliegenden Erfindung weist die Kopfstütze ein Verriegelungsmittel auf, das verhindert, dass sich das erste Teilstück und das zweite Teilstück relativ zueinander bewegen, wobei sich das Verriegelungsmittel zum Lösen der Verriegelung elastisch verformt. Erfindungsgemäß ist folglich vorgesehen, dass das Verriegelungsmittel zum Lösen einer formschlüssigen Verbindung, die zwischen dem Verriegelungsmittel und dem ersten oder zweiten Teilstück vorhanden ist, das Verriegelungsmittel zumindest abschnittsweise elastisch gebogen wird. Dabei lösen sich an dem Verriegelungsmittel vorhandene Formschlussmittel aus dem Eingriff mit Formschlussmitteln, die an einem der Teilstücke vorhanden sind. Um die formschlüssige Verbindung wieder herzustellen, federt das Verriegelungsmittel in seine ursprüngliche Stellung zurück. Vorzugsweise wird das Verriegelungsmittel zum Lösen radial nach außen gebogen.

Die zu diesem Gegenstand der Erfindung gemachten Ausführungen gelten für die anderen Gegenstände der vorliegenden Erfindung gleichermaßen und umgekehrt.

Gemäß einer bevorzugten Ausführungsform erfolgt das Lösen der Verriegelung automatisch, sobald an dem ersten Teilstück der Kopfstütze gezogen wird. Durch diese Zugbewegung wird das Formschlussmittel des Verriegelungsmittels automatisch von dem Formschlussmittel, insbesondere des ersten Teilstücks, wegbewegt, wodurch dessen Verriegelung aufgehoben wird. Diese entriegelte Stellung bleibt bestehen bis Druck auf die Kopfstütze, insbesondere das erste Teilstück, ausgeübt wird, beispielsweise bei einem Unfall und/oder wenn der Sitzinsasse seinen Kopf an das erste Teilstück der Kopfstütze legt. Erst dann rastet das Verriegelungsmittel selbsttätig in seine verriegelnde Stellung zurück. Durch ein weiteres Ziehen kann eine weitere Entriegelung des Verriegelungsmittels bewirkt werden, bis das erste Teilstück seine vorderste Stellung erreicht hat. Soll das erste Teilstück aus dieser Stellung zurück in eine Stellung bewegt werden, in der es weiter von dem Kopf des Sitzinsassen entfernt ist, muss die Verriegelung manuell oder motorisch gelöst werden.

Gemäß einem weiteren oder einem bevorzugten Gegenstand der vorliegenden Erfindung weist das Verriegelungsmittel ein Formschlussmittel auf, das durch zwei unterschiedliche, nicht überlagerte Bewegungen in eine ver- bzw. entriegelnde Stellung verbringbar ist.

Die zu diesem Gegenstand der Erfindung gemachten Ausführungen gelten für die anderen Gegenstände der vorliegenden Erfindung gleichermaßen und umgekehrt.

Beispielsweise ist das Formschlussmittel sowohl mit einer radialen Bewegung als auch mit einer axialen Bewegung von dem Formschlussmittel des ersten oder zweiten Teils lösbar. Während die eine, die radiale, Bewegung, wie oben beschrieben, automatisch erfolgt, erfolgt die andere Bewegung motorisch oder manuell. Manuell oder motorisch wird das Formschlussmittel axial von dem ersten oder zweiten Teil wegbewegt, um dessen Verriegelung aufzuheben.

Die folgenden Ausführungen gelten für alle Gegenstände der vorliegenden Erfindung.

Vorzugsweise weist das Formschlussmittel des Verriegelungsmittels zumindest abschnittsweise einen Radialwinkel auf, der vorzugsweise dem Radialwinkel des Formschlussmittels des ersten oder zweiten Teilstücks entspricht.

In einer bevorzugten Ausführungsform der vorliegenden Erfindung weist die Kopfstütze ein Beabstandungsmittel auf, dass das Formschlussmittel des Verriegelungsmittels verformt. Vorzugsweise drückt sich das Beabstandungsmittel zwischen eines der beiden Teilstücke und biegt das Formschlussmittel des Verriegelungsmittels nach außen, sobald das erste Teilstück in Richtung des Kopfes des Sitzinsassen bewegt wird.

Vorzugsweise ist das Beabstandungsmittel ein Wälzkörper, der in einer sich verjüngenden Bahn geführt wird.

Ein weiterer Gegenstand der vorliegenden Erfindung ist ein Verfahren zur Verstellung einer Kopfstütze für einen Fahrzeugsitz, wobei das Verfahren folgende Schritte aufweist:
- Verlagern zumindest eines dem Kopf des Sitzinsassen zugewandten ersten Teilstücks entlang einer Linie in Richtung des Kopfes eines Fahrzeuginsassen; und
- Stattfinden einer Relativbewegung zwischen dem ersten Teilstück und einem an einem dritten Teilstück angeordneten zweiten Teilstück der Kopfstütze bei der Verlagerungsbewegung; und
- Antreiben eines Beabstandungsmittels durch die Relativbewegung zwischen dem ersten Teilstück und dem an dem dritten Teilstück angeordneten zweiten Teilstück; und
- abschnittsweises Verformen eines Verriegelungsmittels durch das Beabstandungsmittel; und
- Anliegen einer ersten Anlagefläche des ersten Teilstücks an einer zweiten Anlagefläche des zweiten Teilstücks, wobei die erste Anlagefläche und die zweite Anlagefläche mit einem Formschlussmittel, insbesondere einer Verzahnung, versehen sind,
wobei zwischen einer Ebene, die senkrecht zur Verlagerungsrichtung angeordnet ist, und dem Formschlussmittel zumindest abschnittsweise ein Radialwinkel (α) > 0° und < 90° vorgesehen ist.

Die zu den erfindungsgemäßen Kopfstützen gemachten Ausführungen gelten für das erfindungsgemäße Verfahren gleichermaßen und umgekehrt.

Merkmale aus allen Gegenständen der vorliegenden Erfindung können beliebig miteinander kombiniert werden.

Im Folgenden werden die Erfindungen anhand der Figuren 1 - 6 erläutert. Diese Erläuterungen sind lediglich beispielhaft und schränken den allgemeinen Erfindungsgedanken nicht ein. Die Erläuterungen gelten für alle Erfindungsgegenstände gleichermaßen.

Es zeigen:
- **Figur 1**: einen Fahrzeugsitz mit einer Kopfstütze.
- **Figuren 2a bis 2d**: Schnitte durch eine in die Kopfstütze einsetzbare Antriebseinrichtung in unterschiedlichen Axialstellungen.
- **Figur 3**: eine Helix mit nach außen geneigten Formschlussmitteln in verriegeltem Zustand.
- **Figur 4**: das Verriegelungsmittel mit dem Beabstandungsmittel
- **Figur 5**: Detail von Figur 4
- **Figur 6**: eine manuelle Entriegelung des Verriegelungsmittels.

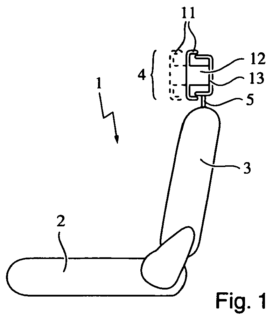

Wie in Figur 1 zu erkennen, umfasst ein erfindungsgemäßer Fahrzeugsitz 1 bzw. ein mit einer erfindungsgemäßen Kopfstütze 4 ausgestatteter Fahrzeugsitz 1 ein Sitzteil 2 und eine mit diesem insbesondere neigungsverstellbar verbundene Rückenlehne 3, welche mit der Kopfstütze 4 ausgestattet ist. Vorzugsweise paarige Haltestangen 5 können zur Befestigung der Kopfstütze an der Rückenlehne 3 vorgesehen sein. Es können jedoch auch alternativ andere Befestigungsmöglichkeiten (nicht dargestellt) zwischen der Rückenlehne 3 und der Kopfstütze 4 vorgesehen sein. Die paarigen Haltestangen 5 der Kopfstütze 4 können im oberen Bereich der Rückenlehne 3 oder im Bereich der Kopfstütze 4 über ein Gelenk (nicht dargestellt) mit der Rückenlehne 3 bzw. mit der Kopfstütze 4 schwenkbar verbunden sein. Die Kopfstütze 4 weist erfindungsgemäß wenigstens ein dem Kopf des Sitzinsassen zugewandtes erstes Teilstück 11 der Kopfstütze 4 auf, das unfallbedingt und/oder zur Komfortverstellung aus einer rückgelagerten (mit durchgezogener Linie in Figur 1 gezeichnet) zum Kopf des Sitzinsassen hin entlang einer Verlagerungsrichtung in eine vordere Stellung (mit gestrichelter Linie in Figur 1 gezeichnet) verlagerbar ist. Bei dem ersten Teilstück 11 handelt es sich insbesondere um ein Polsterelement, an welches der Kopf des Sitzinsassen angelegt bzw. abgestützt werden kann. Bei dem dritten Teilstück der Kopfstütze handelt es sich insbesondere um einen Grundkörper der Kopfstütze, das über die Haltestangen 5 starr oder auch höhen- und/oder neigungsverstellbar mit der Rückenlehne 3 verbunden ist. Innerhalb der Kopfstütze 4 ist zwischen dem ersten Teilstück 11 und dem dritten Teilstück 13 eine nachfolgend im Einzelnen beschriebene und das zweite Teilstück 12 aufweisenden Antriebseinrichtung angeordnet, welche die Verlagerung des ersten Teilstücks 11 in einer Bewegungsrichtung C auf den Kopf des Sitzinsassen hin bewirkt.

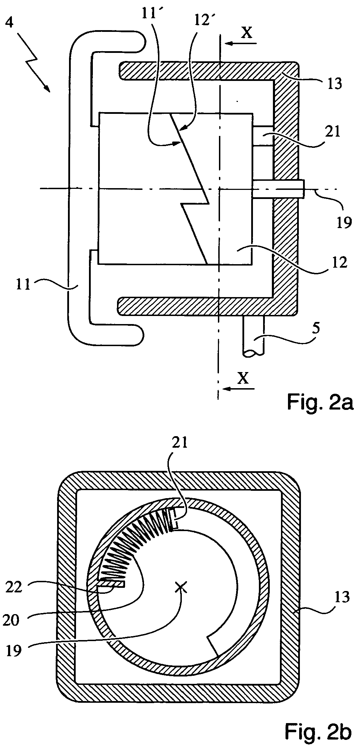

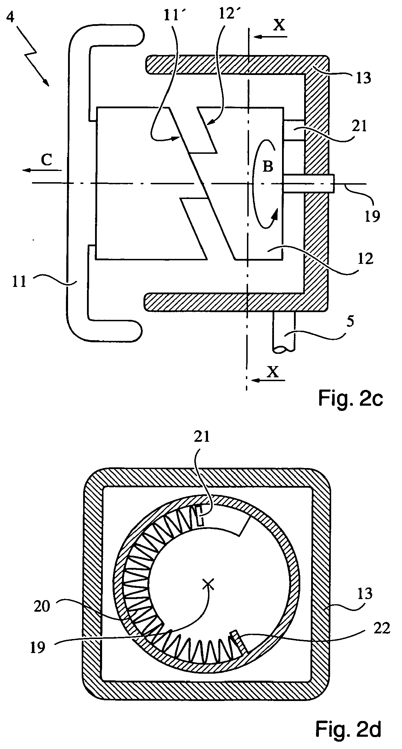

Gemäß der Figuren 2a bis 2d ist die Relativbewegung der Teilstücke 11, 12, 13 der erfindungsgemäßen Kopfstütze 4 in schematischer Weise näher dargestellt. Hierbei zeigen die Figuren 2a und 2b den Zustand der Kopfstütze in der rückgelagerten Stellung und die Figuren 2c und 2d den Zustand der Kopfstütze in der vorgelagerten Stellung (Verlagerung des ersten Teilstücks 11 in Richtung auf den Sitzinsassen zu, Bewegungsrichtung C), wobei die Figur 2b eine vordere Schnittdarstellung der in Figur 2a in einer seitlichen Schnittdarstellung abgebildeten Kopfstütze 4 gemäß der Schnittlinie X-X der Figur 2a darstellt und wobei die Figur 2d eine vordere Schnittdarstellung der in Figur 2c in einer seitlichen Schnittdarstellung abgebildeten Kopfstütze 4 gemäß der Schnittlinie X-X der Figur 2c darstellt.

Wie in den Figuren 2a - d zu erkennen ist, weisen jeweils das erste und das zweite Teilstück 11, 12 jeweils eine Anlagefläche 11', 12', hier jeweils die Stirnflächen, die jeweils schräg zur Mittelachse 19 der Kopfstütze vorgesehen sind. Die Anlageflächen 11, 12' liegen aneinander an und werden durch das Federmittel 20 und die Schräge der Anlageflächen mit einer gewissen Normalkraft aneinander gedrückt. Das erste Teilstück 11 ist darüber hinaus linear verschieblich und das zweite Teilstück 12 drehbar in dem dritten Teilstück 13 vorgesehen. Das zweite Teilstück 12 und das dritte Teilstück 13 weisen jeweils einen Anschlag 21, 22 auf, zwischen denen eine Feder 20 angeordnet ist. In den Figuren 2a und 2b ist die Kopfstütze in einem Zustand dargestellt, in dem sich das erste Teilstück 11 in seiner vom Kopf des Sitzinsassen entferntesten Position befindet. In dieser Situation weist die Feder 20 ihre maximale Vorspannung auf. Wird nun zur Komfortverstellung von dem Sitzinsassen an dem ersten Teilstück 11 gezogen, was in den Figuren 2c und 2d durch den Pfeil C dargestellt ist, entsteht zwischen dem ersten Teilstück 11 und dem zweiten Teilstück 12 eine Lücke, die dadurch geschlossen wird, dass sich das zweite Teilstück, angetrieben durch die Feder 20 um die Achse 19 dreht. Die schrägen Flächen 11', 12' bleiben dadurch ständig in Anlage. Der Fachmann versteht, dass es sich bei den Anlageflächen 11', 12' nicht um Stirnflächen handeln muss, sondern dass es auch Flächen sein können, die am Umfang der Teilstücke 11, 12 angeordnet sind, was in den folgenden Figuren dargestellt ist. Eine Bewegung des Teilstücks vom Kopf des Sitzinsassen weg funktioniert analog. Durch die Linearbewegung des ersten Teilstücks 11 wird das zweite Teilstück 12 in Rotation versetzt und dabei die Feder 20 vorgespannt. Der Fachmann versteht, dass der Verschiebemechanismus des ersten Teils 12 auch anders realisiert sein kann.

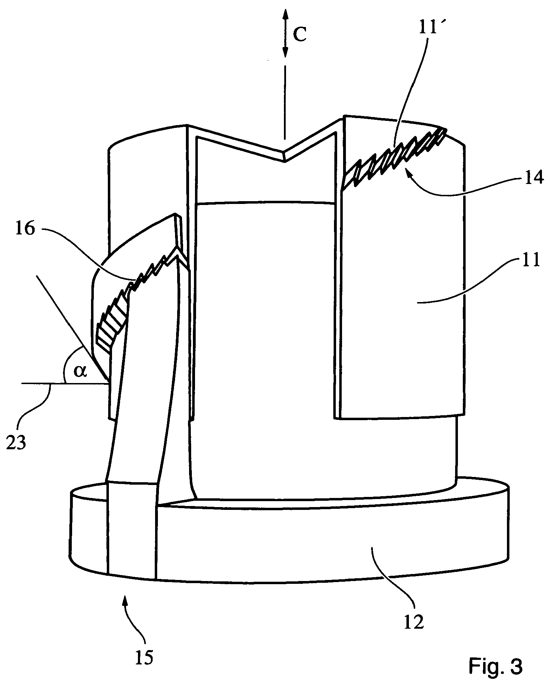

Bei der Ausführungsform gemäß Figur 3 ist die Anlagefläche 11' helixähnlich am Umfang des ersten Teilstücks 11 angeordnet. In Figur 3 ist zu erkennen, dass die Anlagefläche 11'des ersten Teilstücks 11 Formschlussmittel 14, hier eine Sägezahnverzahnung aufweist. Dieses Formschlussmittel 14 weist gegenüber einer senkrecht zur Bewegungsrichtung C aufgespannten Ebene 23 einen Radialwinkel α auf, der in dem vorliegenden Fall 45° beträgt. Der Radialwinkel α ist nicht der Steigungswinkel der helixähnlichen Anlagefläche 11'. An dem zweiten Teilstück 12 ist ein in mindestens einer, vorzugsweise zwei Richtungen keilförmiges Verriegelungsmittel 15 angeordnet, das an seinem Ende zu den Formschlussmitteln 14 komplementäre Formschlussmittel 16 aufweist, die ebenfalls in einem Radialwinkel α so angeordnet sind, dass die Zähne im verriegelten Zustand möglichst großflächig aneinander liegen. Die Formschlussmittel 16 des Verriegelungsmittels 15 stehen bei der Darstellung gemäß Figur 3 im Eingriff mit den Formschlussmitteln 14 und verhindern dadurch, dass sich die Teilstücke 11,12 relativ zueinander verdrehen können. Die Anlagefläche 12' wurde hier aus Gründen der Übersichtlichkeit weggelassen, wäre aber wie die Anlagefläche 11'am Umfang des Teilstücks 12 helixähnlich angeordnet. Wird nun das erste Teilstück 11 von dem Sitzinsassen ein lineares Stück von dem zweiten Teilstück 12 weggezogen, geraten die Formschlussmittel 11', 12'durch diese Bewegung außer Eingriff. Gleichzeitig oder nahezu gleichzeitig rotiert das Teilstück 12 um ein gewisses Winkelstück, dadurch wird ein Beabstandungsmittel 17, hier eine Kugel, zwischen den Umfang des zweiten Teilstücks 12 und den inneren Umfang des Beabstandungsmittels bewegt und biegt dadurch den Teil des Verriegelungsmittels 15, an dem das Formschlussmittel 16 angeordnet ist, elastisch nach außen. Das Formschlussmittel 16 macht folglich zumindest teilweise eine radiale Bewegung von dem Formschlussmittel 14 weg. Diese elastische Verformung des Verriegelungsmittels wird u.a. dadurch begünstigt, dass sich das Verriegelungsmittel 15 in Richtung der Formschlussmittel 16 vorzugsweise in zwei Richtungen verjüngt. Durch die axiale Verlagerung des ersten Teilstücks 11, die radiale Bewegung des Formschlussmittels 16 und die Neigung der Formschlussmittel 14, 16 geraten diese beim Ziehen an dem Teilstück 11 sehr schnell und damit nahezu geräuschlos und verschleißfrei außer Eingriff.

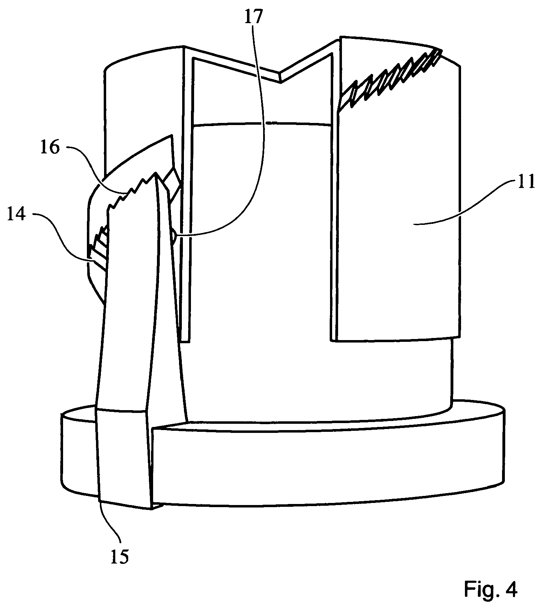

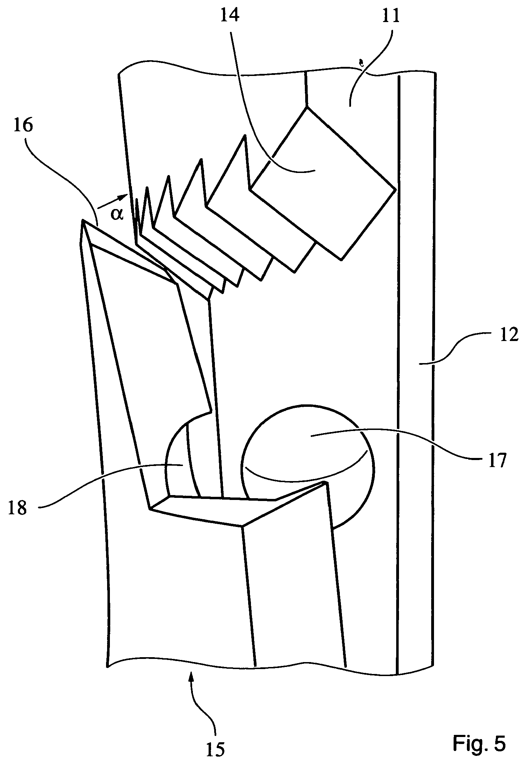

Figur 5 zeigt Details von Figur 4. Zu sehen ist das radial nach außen gebogene Ende des Verriegelungsmittels 15, das das Formschlussmittel 16 aufweist. Ferner ist zu erkennen, dass die Formschlussmittel 14, 16 in einem Radialwinkel α vorgesehen sind. Wie ebenfalls Figur 5 entnommen werden kann, erfolgt die elastische Biegung des Verriegelungsmittels 15 durch ein Beabstandungsmittels 17, hier einer Kugel, wobei auch jeder andere Wälzkörper oder eine Mehrzahl von Wälzkörpern eingesetzt werden kann. Die Kugel 17 ist in einem Aufnahmevolumen 18, einer Ausnahmetasche, angeordnet, deren Tiefe sich von rechts nach links vorzugsweise reduziert. In der linken Position nimmt das in dem Verriegelungsmittel 15 vorgesehene Aufnahmevolumen 18 die Kugel so vollständig auf, dass das Verriegelungsmittel nicht gebogen wird. Bei einer Drehung der Teilstücke 11, 12 relativ zueinander und damit einer Drehung des ersten Teilstücks 11 und des Verriegelungsmittels 15 relativ zueinander, wird die Kugel aus ihrer linken Position herausgedreht (dargestellte Position) und biegt dabei das Verriegelungsmittel abschnittsweise radial nach außen. Auch nach Beendigung der Linearbewegung des ersten Teilstücks verbleibt die Kugel 17 in der in Figur 5 dargestellten Position. Sobald jedoch Druck auf das erste Teilstück ausgeübt wird, sei es durch Anlage des Kopfes des Sitzinsassen oder unfallbedingt, erfolgt eine minimale Relativdrehung zwischen dem Verriegelungsmittel 15 und dem ersten Teilstück 11 und die Kugel wird in ihre linke Position verschoben, so dass die Formschlussmittel 14, 16 wieder im Eingriff sind. Sowohl die Ver- als auch die Entriegelung erfolgen bei einer Bewegung des ersten Teilstücks 11 selbsttätig.

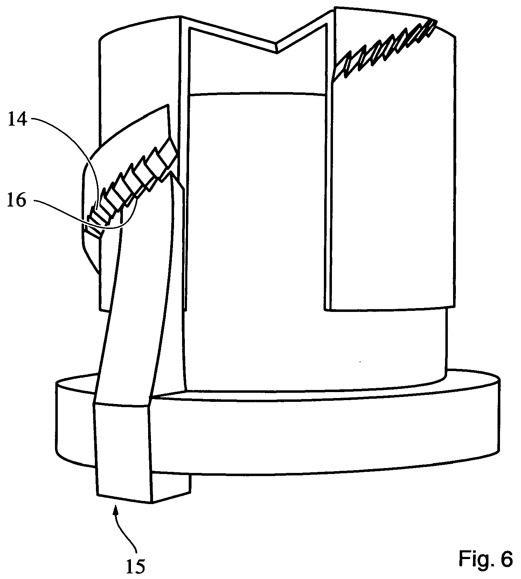

Es gibt jedoch auch Situationen, in denen die Ent- oder Verriegelung erfolgen soll, ohne dass das erste Teilstück 11 bewegt wird. Für diesen Fall weist das Verriegelungsmittel einen Mechanismus, beispielsweise einen Kugelschreibermechanismus, auf, der es axial, von dem Formschlussmittel 14 versetzt. Figur 6 zeigt die, hier durch eine axiale Bewegung des Verriegelungsmittels 15, entriegelte Position des Verriegelungsmittels 15.

### Bezugszeichenliste

- 1: Fahrzeugsitz
- 2: Sitzteil
- 3: Rückenlehne
- 4: Kopfstütze
- 5: Haltestange
- 11: erstes Teilstück der Kopfstütze
- 11': Anlagefläche / Helix des ersten Teilstücks
- 12: zweites Teilstück der Kopfstütze
- 12': Anlagefläche / Helix des zweiten Teilstücks
- 13: drittes Teilstück der Kopfstütze
- 14: Formschlussmittel, Verzahnung
- 15: Verriegelungsmittel
- 16: Formschlussmittel, Verzahnung
- 17: Beabstandungsmittel, Kugel, Walze
- 18: Aufnahmevolumen, Aufnahmetasche
- 19: Linie, Mittellinie, Drehachse
- 20: Federmittel
- 21: Anschlag
- 22: Anschlag
- 23: Ebene senkrecht zur Verlagerungsrichtung

- Pfeil B: Drehrichtung des Hohlzylinders
- Pfeil C: Verschiebung des Polsterkörpers

- α: Radialwinkel

## Patentansprüche

1. Kopfstütze (4) für einen Fahrzeugsitz (1), bei welcher zumindest ein dem Kopf des Sitzinsassen zugewandtes erstes Teilstück (11) entlang einer Linie (19) verlagerbar ist, wobei bei der Verlagerungsbewegung zwischen dem ersten Teilstück (11) und einem an einem dritten Teilstück (13) angeordneten zweiten Teilstück (12) der Kopfstütze eine Relativbewegung stattfindet, und eine Anlagefläche (11') des ersten Teilstücks (11) an einer Anlagefläche (12') des zweiten Teilstücks (12) anliegt und eine Anlagefläche (11', 12') mit einem Formschlussmittel (14), insbesondere einer Verzahnung, versehen ist, **dadurch gekennzeichnet, dass** zwischen einer Ebene (20), die senkrecht zur Verlagerungsrichtung (C) angeordnet ist, und dem Formschlussmittel (14) zumindest abschnittsweise ein Radialwinkel (α) > 0° und < 90° vorgesehen ist.

2. Kopfstütze nach Anspruch 1, **dadurch gekennzeichnet, dass** der Radialwinkel > 30°, vorzugsweise zwischen 40 und 50° beträgt.

3. Kopfstütze nach einem der voranstehenden Ansprüche, **dadurch gekennzeichnet, dass** die Verzahnung (14) eine Sägezahnverzahnung ist.

4. Kopfstütze nach einem der voranstehenden Ansprüche, **dadurch gekennzeichnet, dass** sie ein Verriegelungsmittel (15) aufweist, das verhindert, dass sich ein erstes Teilstück (11) und ein zweites Teilstück (12) relativ zueinander bewegen, **dadurch gekennzeichnet, dass** sich das Verriegelungsmittel zum Lösen der Verriegelung verformt.

5. Kopfstütze von Anspruch 4, **dadurch gekennzeichnet, dass** das Verriegelungsmittel (15) Formschlussmittel (16) aufweist und dass diese Formschlussmittel durch zwei unterschiedliche, nicht überlagerte Bewegungen in eine ver- bzw. entriegelnde Stellung verbringbar sind.

6. Kopfstütze nach Anspruch 4 oder 5 **dadurch gekennzeichnet, dass** die Formschlussmittel nach außen bewegbar sind.

7. Kopfstütze nach einem der Ansprüche 5 - 6, **dadurch gekennzeichnet, dass** die axiale Stellung des Verriegelungsmittels (15) veränderbar ist.

8. Kopfstütze nach einem der Ansprüche 4 - 7, **dadurch gekennzeichnet, dass** das Formschlussmittel (16) zumindest abschnittsweise einen Radialwinkel (α) aufweist, der vorzugsweise dem Radialwinkel des Formschlussmittels (14) entspricht.

9. Kopfstütze nach einem der voranstehenden Ansprüche, **dadurch gekennzeichnet, dass** sie ein Beabstandungsmittel (17) aufweist, dass das Formschlussmittel (16) des Verriegelungsmittels (15) verformt.

10. Kopfstütze nach Anspruch 9, **dadurch gekennzeichnet, dass** das Beabstandungsmittel (17) von einem Teilstück (11, 12) angetrieben ist.

11. Kopfstütze nach einem der voranstehenden Ansprüche, **dadurch gekennzeichnet, dass** das Beabstandungsmittel (17) ein Wälzkörper ist.

12. Verfahren zur Verstellung einer Kopfstütze (4) für einen Fahrzeugsitz (1), wobei das Verfahren folgende Schritte aufweist:
- Verlagern zumindest eines dem Kopf des Sitzinsassen zugewandten ersten Teilstücks (11) entlang einer Linie (19) in Richtung des Kopfes eines Fahrzeuginsassen; und
- Stattfinden einer Relativbewegung zwischen dem ersten Teilstück (11) und einem an einem dritten Teilstück (13) angeordneten zweiten Teilstück (12) der Kopfstütze bei der Verlagerungsbewegung; und
- Antreiben eines Beabstandungsmittels (17) durch die Relativbewegung zwischen dem ersten Teilstück (11) und dem an dem dritten Teilstück (13) angeordneten zweiten Teilstück (12); und
- abschnittsweises Verformen eines Verriegelungsmittels (15) durch das Beabstandungsmittel (17); und
- Anliegen einer ersten Anlagefläche (11') des ersten Teilstücks (11) an einer zweiten Anlagefläche (12') des zweiten Teilstücks (12), wobei die erste Anlagefläche (11') und die zweite Anlagefläche (12') mit einem Formschlussmittel (14), insbesondere einer Verzahnung, versehen sind,
**dadurch gekennzeichnet, dass** zwischen einer Ebene (20), die senkrecht zur Verlagerungsrichtung (C) angeordnet ist, und dem Formschlussmittel (14) zumindest abschnittsweise ein Radialwinkel (α) > 0° und < 90° vorgesehen ist.

## Claims

1. Head restraint (4) for a vehicle seat (1), in which at least a first partial piece (11) facing the head of the seat occupant can be displaced along a line (19), a relative movement taking place during the displacement movement between the first partial piece (11) and a second partial piece (12) of the head restraint arranged on a third partial piece (13) and an abutment face (11') of the first partial piece (11) abutting an abutment face (12') of the second partial piece (12) and an abutment face (11', 12') being provided with a positive-locking means (14), in particular a tooth arrangement, **characterized in that** a radial angle (α) > 0° and < 90° is provided at least partially between a plane (20) which is arranged perpendicularly relative to the displacement direction (C) and the positive-locking means (14).

2. Head restraint according to Claim 1, **characterized in that** the radial angle is > 30°, preferably between 40 and 50°.

3. Head restraint according to either of the preceding claims, **characterized in that** the tooth arrangement (14) is a saw-tooth tooth arrangement.

4. Head restraint particularly according to any one of the preceding claims, **characterized in that** it has a locking means (15) which prevents a first partial piece (11) and a second partial piece (12) from moving relative to each other, **characterized in that** the locking means becomes deformed in order to release the locking action.

5. Head restraint according to Claim 4, **characterized in that** the locking means (15) has positive-locking means (16), and **in that** those positive-locking means can be brought into a locking or unlocking position by two different, non-overlapping movements.

6. Head restraint according to Claim 4 or 5, **characterized in that** the positive-locking means can be moved outward.

7. Head restraint according to any one of Claims 5 to 6, **characterized in that** the axial position of the locking means (15) can be changed.

8. Head restraint according to any one of Claims 4 to 7, **characterized in that** the positive-locking means (16) has at least partially a radial angle (α) which preferably corresponds to the radial angle of the positive-locking means (14).

9. Head restraint according to any one of the preceding Claims, **characterized in that** it has a spacer means (17) that deforms the positive-locking means (16) of the locking means (15).

10. Head restraint according to Claim 9, **characterized in that** the spacer means (17) is driven by a partial piece (11, 12).

11. Head restraint according to any one of the preceding claims, **characterized in that** the spacer means (17) is a roller member.

12. Method for adjusting a head restraint (4) for a vehicle seat (1), wherein the method has the following steps:
- at least a first partial piece (11) facing the head of the seat occupant being displaced along a line (19) in the direction of the head of a vehicle occupant; and
- a relative movement taking place between the first partial piece (11) and a second partial piece (12) of the head restraint arranged on a third partial piece (13) during the displacement movement; and
- a spacer means (17) being driven by way of the relative movement between the first partial piece (11) and the second partial piece (12) arranged on the third partial piece (13); and
- a locking means (15) being partially deformed by the spacer means (17); and
- a first abutment face (11') of the first partial piece (11) abutting against a second abutment face (12') of the second partial piece (13), wherein the first abutment face (11') and the second abutment face (12') are provided with a positive-locking means (14), in particular a toothing,
**characterized in that** a radial angle (α) > 0° and < 90° is provided at least partially between a plane (20) which is arranged perpendicularly relative to the displacement direction (C) and the positive-locking means (14).

## Revendications

1. Appui-tête (4) pour un siège de véhicule (1), dans lequel au moins une première pièce partielle (11) tournée vers la tête de l'occupant du siège peut être déplacée le long d'une ligne (19), un mouvement relatif se produisant lors du mouvement de déplacement entre la première pièce partielle (11) et une deuxième pièce partielle (12) de l'appui-tête disposée au niveau d'une troisième pièce partielle (13) et une surface d'appui (11') de la première pièce partielle (11) s'appliquant contre une surface d'appui (12') de la deuxième pièce partielle (12) et une surface d'appui (11', 12') étant pourvue d'un moyen d'engagement par correspondance de formes (14), en particulier d'une denture, **caractérisé en ce qu'**entre un plan (20) qui s'étend perpendiculairement à la direction de déplacement (C) et le moyen d'engagement par correspondance de formes (14) est prévu au moins en partie un angle radial (α) > 0° et < 90°.

2. Appui-tête selon la revendication 1, **caractérisé en ce que** l'angle radial est > 30°, de préférence est compris entre 40 et 50°.

3. Appui-tête selon l'une quelconque des revendications précédentes, **caractérisé en ce que** la denture (14) est une denture en dents de scie.

4. Appui-tête selon l'une quelconque des revendications précédentes, **caractérisé en ce qu'**il présente un moyen de verrouillage (15) qui empêche le déplacement l'une par rapport à l'autre d'une première pièce partielle (11) et d'une deuxième pièce partielle (12), **caractérisé en ce que** le moyen de verrouillage se déforme pour desserrer le verrouillage.

5. Appui-tête selon la revendication 4, **caractérisé en ce que** le moyen de verrouillage (15) présente des moyens d'engagement par correspondance de formes (16) et **en ce que** ces moyens d'engagement par correspondance de formes peuvent être amenés par deux mouvements différents non superposés dans une position de verrouillage ou de déverrouillage.

6. Appui-tête selon la revendication 4 ou 5, **caractérisé en ce que** les moyens d'engagement par correspondance de formes peuvent être déplacés vers l'extérieur.

7. Appui-tête selon l'une quelconque des revendications 5 à 6, **caractérisé en ce que** la position axiale du moyen de verrouillage (15) est variable.

8. Appui-tête selon l'une quelconque des revendications 4 à 7, **caractérisé en ce que** le moyen d'engagement par correspondance de formes (16) présente au moins en partie un angle radial (α) qui correspond de préférence à l'angle radial du moyen d'engagement par correspondance de formes (14).

9. Appui-tête selon l'une quelconque des revendications précédentes, **caractérisé en ce qu'**il présente un moyen d'espacement (17) qui déforme le moyen d'engagement par correspondance de formes (16) du moyen de verrouillage (15).

10. Appui-tête selon la revendication 9, **caractérisé en ce que** le moyen d'espacement (17) est entraîné par une pièce partielle (11, 12).

11. Appui-tête selon l'une quelconque des revendications précédentes, **caractérisé en ce que** le moyen d'espacement (17) est un corps de roulement.

12. Procédé de réglage d'un appui-tête (4) pour un siège de véhicule (1), le procédé présentant les étapes suivantes :
- déplacement d'au moins une première pièce partielle (11) tournée vers la tête de l'occupant du siège le long d'une ligne (19) dans la direction de la tête d'un occupant du véhicule ; et
- réalisation d'un mouvement relatif entre la première pièce partielle (11) et une deuxième pièce partielle (12) de l'appui-tête disposée au niveau d'une troisième pièce partielle (13) lors du mouvement de déplacement ; et
- entraînement d'un moyen d'espacement (17) par le mouvement relatif entre la première pièce partielle (11) et la deuxième pièce partielle (12) disposée au niveau de la troisième pièce partielle (13) ; et
- déformation en partie d'un moyen de verrouillage (15) par le moyen d'espacement (17) ; et
- application d'une première surface d'appui (11') de la première pièce partielle (11) contre une deuxième surface d'appui (12') de la deuxième pièce partielle (13), la première surface d'appui (11') et la deuxième surface d'appui (12') étant pourvues d'un moyen d'engagement par correspondance de formes (14), en particulier d'une denture,
**caractérisé en ce qu'**entre un plan (20) qui s'étend perpendiculairement à la direction de déplacement (C) et le moyen d'engagement par correspondance de formes (14) est prévu au moins en partie un angle radial (α) > 0° et < 90°.
